# EUROPÄISCHE PATENTSCHRIFT

(11) **EP 4 538 132 B1**
(45) Veröffentlichungstag und Bekanntmachung des Hinweises auf die Patenterteilung: **25.03.2026**
(21) Anmeldenummer: 24191502.4
(22) Anmeldetag: 29.07.2024
(51) Int. Cl.: B60W 40/08, B60W 40/09

(54) **VERFAHREN ZUM ERMITTELN EINES UNSICHERHEITSGRADES EINES FAHRERS EINES FAHRZEUGS**
METHOD FOR DETERMINING A DEGREE OF UNCERTAINTY OF A DRIVER OF A VEHICLE
PROCÉDÉ POUR DÉTERMINER LE DEGRÉ D'INCERTITUDE D'UN CONDUCTEUR D'UN VÉHICULE

(30) Priorität: 16.08.2023 DE 102023207851
(43) Veröffentlichungstag der Anmeldung: 16.04.2025
(73) Patentinhaber: VOLKSWAGEN AG, 38440 Wolfsburg (DE)
(72) Erfinder: Göricke, Bastian, 38446 Wolfsburg (DE)

(56) Entgegenhaltungen:
- US-A1- 2018 075 309
- US-B1- 10 967 871
- US-B2- 11 702 094

## Beschreibung

Die Erfindung betrifft ein Verfahren zum Ermitteln eines Unsicherheitsgrades eines Fahrers eines Fahrzeugs, bei dem Messdaten von mindestens einem fahrzeugseitigen Sensor empfangen und ausgewertet werden. Des Weiteren betrifft die Erfindung ein Verfahren zum Unterstützen eines Fahrers eines Fahrzeugs in einem ungewohnten Verkehrsumfeld, ein Verfahren zum Vorbereiten und/oder Informieren eines Fahrers eines Fahrzeugs, eine Steuereinheit sowie ein Fahrzeug mit einer Steuereinheit.

Fahrten in andere Länder stellen den Fahrer eines Fahrzeugs häufig vor Herausforderungen oder können erhöhten Stress auslösen. Beispielsweise können in unterschiedlichen Ländern die Verkehrsschilder optisch voneinander abweichen. Häufig existieren auch Schilder mit unbekannten Symbolen oder Texten in einer für den Fahrer unverständlichen Sprache. Gleiches gilt für Bodenmarkierungen, die in Farbe, Form und Bedeutung von den bekannten Regeln des Heimatlandes abweichen können. Zusätzlich können auch andere Verkehrsregeln (ohne explizite Schilder/Markierungen) relevant sein, die zu einem anderen Verhalten anderer Verkehrsteilnehmer führen, als es der Fahrer erwarten würde. Derartige Herausforderungen bei einem grenzüberschreitenden Steuern eines Fahrzeugs lösen, sowohl bei Fahr- als auch bei Parksituationen, Verunsicherung und Stress beim Fahrer aus und führen entsprechend zur Ablenkung von der eigentlichen Fahraufgabe. Durch diese Ablenkung des Fahrers kann die Verkehrssicherheit beeinträchtigt werden.

Aus der DE 10 2020 205 425 A1 ist ein Verfahren zum automatischen Informieren eines Nutzers im Fahrzeug über eine geltende Verkehrsvorschrift bekannt. Zumindest eine Höchstgeschwindigkeit für zumindest einen Verkehrswegetyp wird bei einem Grenzübergang mit dem zugehörigen Bußgeld bei einem Überschreiten dieser Höchstgeschwindigkeit als Information an den Nutzer des Fahrzeugs ausgegeben.

Die DE 10 2012 216 645 A1 offenbart ein Verfahren zum Betreiben eines Fahrzeugs, bei dem ein Fahrzeugführer länderspezifisch unterstützt wird. Dabei wird die Position des Fahrzeugs bestimmt und einem Land zugewiesen, welches als Grundlage für die Bereitstellung der Informationen dient.

In der EP 1 519 339 A1 ist ein Verfahren zur Ausgabe von Verkehrsregeln und eine hierfür vorgesehene Fahrerinformationsvorrichtung beschrieben. Dabei wird ein Überschreiten einer Ländergrenze oder ein bevorstehendes Überschreiten einer Ländergrenze von einem ersten zu einem zweiten Land ermittelt. Hierbei werden diejenigen Verkehrsregeln ausgegeben, die sich zwischen dem ersten und dem zweiten Land unterscheiden, sodass ein Fahrer sein Fahrverhalten an die ab der Grenze geltenden Verkehrsregeln anpassen kann.

Bei der US 10 967 871 B1 berechnet ein Fahrererkennungssubsystem eine Charakterisierung des Fahrers auf der Grundlage physiologischer Attribute des Fahrers, die gemessen werden, während der Fahrer ein Fahrzeug führt. Anschließend verwendet eine Anwendung zur Fahrerbewertung ein Konfidenzniveau-Modell, um auf der Grundlage der Charakterisierung des Fahrers ein dem Fahrer zugeordnetes Konfidenzniveau zu schätzen. Die Fahrerbewertungsanwendung veranlasst dann die Fahrerassistenzanwendung(en), auf der Grundlage des Konfidenzniveaus Operationen auszuführen, die mindestens eine Funktionalität des Fahrzeugs ändern. Der Vorteil, dass die Fahrerassistenzanwendung(en) die Fahrerassistenzanwendung(en) in die Lage versetzt (versetzen), das Vertrauensniveau des Fahrers zu berücksichtigen, ist, dass die Fahrerbewertungsanwendung im Vergleich zu herkömmlichen Techniken zur Implementierung von Fahrerassistenzanwendungen, die das Vertrauensniveau des Fahrers nicht berücksichtigen, die Fahrsicherheit ignorieren kann.

Die US 2018 075 309 A1 zeigt ein Verfahren zur Erkennung von Beinahe-Kollisionen, bei dem die Bestimmung einer Risikokarte für ein Fahrzeug und die automatische Erkennung eines Beinahe-Kollisionsereignisses mit einem Objekt auf der Grundlage des Fahrzeugverhaltens in Bezug auf die Risikokarte vorgesehen ist.

Bei der US 11 702 094 B2 umfasst eine Fahrunterstützungsvorrichtung einen Speicher, der so konfiguriert ist, dass er Informationen speichert, die den Grad der Vertrautheit eines Fahrzeugführers mit einer Umgebung darstellen; und einen Prozessor, der so konfiguriert ist, dass er auf der Grundlage eines Sensorsignals, das eine Situation in der Umgebung des Fahrzeugs darstellt und von einem an dem Fahrzeug angebrachten Sensor erhalten wird, ein um das Fahrzeug herum vorhandenes Objekt erfasst, erkennt, ob sich das Objekt dem Fahrzeug nähert, so dass das Objekt mit dem Fahrzeug kollidieren kann, und den Fahrer über die Annäherung informiert, und den Fahrer über eine im Fahrzeug eingebaute Warneinrichtung zu einem Zeitpunkt, der dem Vertrautheitsgrad des Fahrers mit der Umgebung des Fahrzeugs entspricht, über die Annäherung zu warnen, wenn erkannt wird, dass sich das Objekt dem Fahrzeug so nähert, dass es zu einer Kollision mit dem Fahrzeug kommen kann.

Der Erfindung liegt die Aufgabe zugrunde, ein Verfahren zu schaffen, durch welches ein Fahrer beispielsweise bei einem grenzüberschreitenden Steuern eines Fahrzeugs unterstützt und entlastet werden kann. Diese Aufgabe wird durch die im Anspruch 1 angegebenen Merkmale gelöst. Weitere vorteilhafte Ausgestaltungen der Erfindung sind in den Unteransprüchen beschrieben.

Gemäß einem Aspekt der Erfindung wird ein Verfahren zum Ermitteln eines Unsicherheitsgrades eines Fahrers eines Fahrzeugs bereitgestellt. In einem Schritt werden Messdaten von mindestens einem fahrzeugseitigen Sensor empfangen und ausgewertet. Basierend auf den ausgewerteten Messdaten und/oder basierend auf den ausgewerteten Messdaten in Relation zu ausgewerteten Messdaten in der Vergangenheit wird ein Unsicherheitsgrad des Fahrers ermittelt. Hierzu können die ermittelten und ausgewerteten Messdaten zumindest zeitweise gespeichert und zu Vergleichszwecken eingesetzt werden, um Abweichungen eines Fahrverhaltens des Fahrers in neuen Umgebungen zu registrieren.

Je nach Ausgestaltung können Tageszeiten, Jahreszeiten, Witterungsbedingungen, Fahrzeugzustände, beispielsweise restliche Reichweite, Fahrmodus, und dergleichen bei dem Vergleich berücksichtigt werden, um mögliche Unterschiede im Fahrverhalten des Fahrers, die ausschließlich aufgrund von neuen und ungewohnten Verkehrsumgebungen resultieren, feststellen zu können. Vorteilhafterweise können aktuelle Messdaten mit historischen Messdaten von gleichen oder ähnlichen Verkehrssituationen miteinander verglichen werden, um den Unsicherheitsgrad des Fahrers festzustellen. Dabei können vorzugsweise die Randbedingungen der miteinander verglichenen Verkehrssituationen ebenfalls ähnlich oder identisch sein, um die Genauigkeit des Verfahrens zu verbessern.

Ein Unsicherheitsgrad des Fahrers kann beispielsweise mit Hilfe einer Skala (0 bis 100%, mit 100% als höchsten Unsicherheitsgrad) oder durch eine Bewertung (1 bis 5, mit 5 als höchsten Unsicherheitsgrad) visualisiert bzw. definiert werden.

Gemäß einem weiteren Aspekt der Erfindung wird eine Steuereinheit bereitgestellt, welche dazu eingerichtet ist, Messdaten von mindestens einem Sensor zu empfangen und zumindest eines der erfindungsgemäßen Verfahren auszuführen. Nach einem weiteren Aspekt der Erfindung wird ein Fahrzeug bereitgestellt, welches mindestens einen Sensor und mindestens eine erfindungsgemäße Steuereinheit aufweist.

Diese durch die Messdaten sensorisch ermittelten Informationen über den Fahrer und sein Fahrverhalten ermöglichen absolut und/oder im Verhältnis zu vergleichbaren Situationen im Heimatland oder in der Vergangenheit eine Ermittlung, wie weit der Fahrer mit den Verkehrsregeln im Ausland oder der ungewohnten Verkehrsumgebung vertraut ist bzw. sich an die Regeln hält.

Durch die Auswertung der Messdaten aus dem Umfeld des Fahrzeugs und einer optionalen Fahrerbeobachtung kann ein grundsätzlicher Unsicherheitslevel bzw. Unsicherheitsgrad des Fahrers abgeleitet werden. Weiterhin kann bei einem Vorliegen von einer ausreichenden Anzahl von situativen Messdaten ein situativer bzw. situationsabhängiger Unsicherheitsgrad ermittelt werden. Ein derartiger situationsabhängiger Unsicherheitsgrad kann beispielsweise bei einem Befahren eines mehrspurigen Kreisverkehrs mit für den Fahrer unklarer Fahrspurregelung ermittelt werden, bei dem der Fahrer häufig den Sicherheitsabstand zu anderen Verkehrsteilnehmern unterschreitet.

Das erfindungsgemäße Verfahren kann beispielsweise im Rahmen eines Assistenten zur Fahrerintentionserkennung eingesetzt werden.

Erfindungsgemäß werden Messdaten von mindestens einem Positionssensor empfangen und ausgewertet. Anhand der Messdaten des Positionssensors wird der Unsicherheitsgrad des Fahrers in einem gewohnten Verkehrsumfeld des Fahrers oder in einem ungewohnten Verkehrsumfeld des Fahrers ermittelt. Zusätzlich wird ein gewohntes Verkehrsumfeld des Fahrers oder ungewohntes Verkehrsumfeld des Fahrers anhand des ermittelten Unsicherheitsgrades des Fahrers bestimmt. Somit kann abhängig von den gewünschten Anforderungen ein vom Fahrer üblicherweise befahrenes Umfeld als ein gewohntes Umfeld eingestuft werden. Hierzu können übliche Einkaufsrouten, Fahren zu einem Arbeitsplatz des Fahrers, definierter Umkreis um den Wohnort des Fahrers und dergleichen zugeordnet werden. Das gewohnte Verkehrsumfeld kann somit anhand der Positionsdaten des Fahrzeugs und einer Häufigkeit der ermittelten Positionsdaten an bestimmten Positionen bestimmt werden. Verlässt der Fahrer sein gewohntes Umfeld, kann durch das Verfahren in einer einfachen Ausgestaltung ein Befahren eines ungewohnten Umfelds registriert werden.

Das Befahren eines ungewohnten Verkehrsumfelds kann auch bei einem Überschreiten eines vordefinierten Abstands von beispielsweise 50 - 200 km oder mehr von dem gewohnten Verkehrsumfeld definiert werden. Fährt der Fahrer beispielsweise ausschließlich in einer ländlichen Umgebung und befährt erstmalig eine Großstadt, kann sein Unsicherheitsgrad deutlich ansteigen.

Ein Überschreiten einer Landesgrenze, welche ebenfalls mit Hilfe der Positionsdaten registriert wird, kann ein Befahren eines ungewohnten Verkehrsumfelds sein. Ein Verlassen eines Heimatlandes des Fahrers kann hierbei als ein Befahren eines ungewohnten Verkehrsumfelds definiert werden, unabhängig von einer Entfernung zu einem gewohnten Verkehrsumfeld des Fahrers.

Vorteilhafterweise kann das Verfahren individuell auf einen Fahrer konfiguriert und angepasst sein. Bei mehreren Fahrern eines Fahrzeugs kann für jeden Fahrer ein Profil vorgesehen sein, mit Hilfe dessen eine individuelle Bestimmung des Unsicherheitsgrades möglich ist.

Nach einer weiteren Ausführungsform wird der Unsicherheitsgrad des Fahrers in einem ungewohnten Verkehrsumfeld bei einem Überschreiten einer Landesgrenze oder in einem Ausland ermittelt. Durch das Verfahren kann anhand von Standortdaten bzw. Positionsdaten das Verlassen des Heimatlandes des Fahrers ermittelt werden. Durch die Standorthistorie kann weiterhin ermittelt werden, ob und wie lange der Fahrer in der Vergangenheit das entsprechende Ausland bereits besucht hat, und daraus ableiten, wie groß die Erfahrung mit den Verkehrsregeln dieses Landes ist.

Die Auswertung von Daten der Umfeldsensorik ermöglicht dabei eine Bewertung, inwieweit das Fahrverhalten des Fahrers im Ausland von seinem üblichen Verhalten im gewohnten Verkehrsumfeld abweicht.

Gemäß einem weiteren Ausführungsbeispiel wird der Unsicherheitsgrad in Form eines generellen Unsicherheitsgrades oder in Form eines situationsabhängigen Unsicherheitsgrades ermittelt. Durch diese Maßnahme kann der Unsicherheitsgrad aus dem generellen Unsicherheitsgrad und dem situationsabhängigen Unsicherheitsgrad zusammengesetzt werden. Dabei kann der generelle Unsicherheitsgrad einen Grundwert für einen Fahrer definieren, welcher nach einer Berechnung statisch bleiben kann. Der situationsabhängige Unsicherheitsgrad bildet hierbei einen dynamischen Anteil aus, welcher von Verkehrssituation zu Verkehrssituation abweichen kann.

Die Höhe des situativen bzw. situationsabhängigen Unsicherheitsgrades ermöglicht zusätzlich für die entsprechende Situation eine optimierte bzw. erweitere Parametrisierung. Als Beispiel kann vor einem mehrspurigen Kreisverkehr und bei erkannter Unsicherheit des Fahrers durch die Fahrerbeobachtung die Fahrzeuggeschwindigkeit stärker verringert werden als üblicherweise durch ein Fahrassistenzsystem vorgesehen wäre.

Ein Steuern des Fahrzeugs mit einer verlangsamten Geschwindigkeit aufgrund von Verunsicherung kann ermittelt werden, wenn Messdaten von einem Geschwindigkeitssensor empfangen und ausgewertet werden. Dabei kann insbesondere eine langsamere Fahrzeuggeschwindigkeit detektiert werden als von einer örtlichen Verkehrsführung vorgesehen ist. Die vorgesehene Geschwindigkeit oder Richtgeschwindigkeit kann beispielsweise mit Hilfe einer optischen Verkehrszeichenerkennung festgestellt werden.

Durch das Verfahren können vorteilhafterweise auch ähnliche Verkehrsszenarien (z.B. Durchfahrt Kreisverkehr) im Inland und Ausland miteinander verglichen werden. Wird im Ausland im ähnlichen Szenario beispielsweise deutlich langsamer gefahren, dann kann eine derartige Abweichung als ein Indiz für Unsicherheit im Rahmen einer Bestimmung des Unsicherheitsgrads berücksichtigt werden. Diese Maßnahme kann mit oder ohne einen direkten Bezug auf örtliche Geschwindigkeitsbegrenzungen umgesetzt werden.

Gemäß einem weiteren Ausführungsbeispiel werden Messdaten von mindestens einem Kamerasensor und/oder einem PSD Sensor empfangen und ausgewertet. Durch diese Maßnahme kann insbesondere ein defensives oder zögerliches Verhalten des Fahrers bei einem Spurwechsel und beim Abbiegen detektiert werden, welches einen erhöhten Unsicherheitsgrad des Fahrers indizieren kann. Hierfür können beispielsweise als Frontkameras ausgestaltete Sensoren eingesetzt werden.

Zunehmend größere Sicherheitsabstände zu vorausfahrenden Verkehrsteilnehmern können sensorisch festgestellt werden, wenn Messdaten von mindestens einem Radarsensor und/oder LIDAR-Sensor empfangen und ausgewertet werden. Je nach Ausgestaltung können auch durch alternative oder zusätzliche Kamerasensoren Messdaten ermittelt und Abstände bestimmt werden. Derartige Verhaltensänderungen des Fahrers können ebenfalls einen steigenden Unsicherheitsgrad des Fahrers wiedergeben. Die Sensoren können beispielsweise im Heckbereich und/oder Frontbereich des Fahrzeugs angeordnet sein, um andere Verkehrsteilnehmer im Fahrzeugumfeld ermitteln zu können. Derartige Informationen ermöglichen absolut und insbesondere im Verhältnis zu vergleichbaren Situationen im Heimatland eine Ermittlung, wie weit der Fahrer mit den Verkehrsregeln im Ausland vertraut ist bzw. sich an die Regeln hält.

Gemäß einem weiteren Ausführungsbeispiel werden Messdaten von mindestens einem Sensor zur Fahrerüberwachung empfangen und ausgewertet. Diese Maßnahme ermöglicht die Berücksichtigung von weiteren Eingangsgrößen in Form von Kameras zur Fahrerbeobachtung. Hierfür können beispielsweise Sensoren, wie beispielsweise Mikrofone oder Fahrerbeobachtungskameras, eingesetzt werden. Das Blickverhalten des Fahrers auf Verkehrsschilder, Spurmarkierungen sowie die Fahrzeuganzeigen kann in Bezug auf die Dauer und Häufigkeit bewertet werden. Weiterhin kann die Häufigkeit und Geschwindigkeit des allgemeinen Umsehens des Fahrers in Bezug auf andere Verkehrsteilnehmer bewertet werden. Mit diesen Informationen kann insbesondere das Verhalten des Fahrers im Heimatland hinsichtlich eines Unsicherheitsgrades abgeschätzt werden. Alternativ oder zusätzlich zur Bestimmung des Unsicherheitsgrads im Heimatland kann auch im Ausland die Fahrerüberwachung als eine Eingangsgröße zur Bestimmung des Unsicherheitsgrads berücksichtigt werden.

Das Verfahren kann besonders präzise oder energieeffizient durch eine Steuereinheit ausgeführt werden, wenn der Unsicherheitsgrad des Fahrers kontinuierlich oder in zeitlichen Abständen ermittelt wird, wobei eine zeitliche Veränderung des Unsicherheitsgrades des Fahrers bestimmt wird. Weiterhin kann durch ein Bestimmen einer zeitlichen Veränderung des Unsicherheitsgrades des Fahrers festgestellt werden, ob sich der Fahrer bei steigender Fahrtzeit/-entfernung sicherer (Unsicherheitsgrad sinkt) fühlt. Anhand dieser Informationen kann beispielsweise eine Parametrisierung eines auf dem Verfahren basierenden Fahrassistenzsystems angepasst werden. Insbesondere kann mit einem sinkenden Unsicherheitsgrad des Fahrers eine durch das Fahrassistenzsystem bereitgestellte Hilfestellung zunehmend reduziert werden.

Nach einem weiteren Aspekt der Erfindung wird ein Verfahren zum Unterstützen eines Fahrers eines Fahrzeugs in einem ungewohnten Verkehrsumfeld bereitgestellt. In einem Schritt wird ein Unsicherheitsgrad des Fahrers durch ein zuvor beschriebenes, erfindungsgemäßes Verfahren ermittelt. Anschließend wird basierend auf dem ermittelten Unsicherheitsgrad eine Parametrisierung von mindestens einem Fahrassistenzsystem des Fahrzeugs angepasst. Hierdurch kann das Verfahren vorteilhafterweise in Form eines Fahrassistenzsystems realisiert oder mit mindestens einem Fahrassistenzsystem verknüpft werden, welches den Fahrer bei einem zunehmenden Unsicherheitsgrad unterstützen und bei seiner Fahraufgabe helfend begleiten kann.

Je nachdem, ob ein genereller Unsicherheitsgrad oder ein situationsabhängiger Unsicherheitsgrad ermittelt werden kann, erfolgt eine Anpassung von Parametern des Fahrassistenzsystems. Die Höhe des situationsabhängigen Unsicherheitsgrades ermöglicht beispielsweise eine zusätzliche Anpassung der Parameter bei einem Befahren von bestimmten Verkehrssituationen. Derartige Verkehrssituationen können bereits bei einer Routenplanung durch ein fahrzeugseitiges Navigationssystem berücksichtigt werden. Beispielsweise können Grenzübergänge, Wechsel von Rechtsverkehr zu Linksverkehr, unübersichtliche Kreuzungen, mehrfache und/oder mehrspurige Kreisverkehre und dergleichen durch ein Bestimmen eines situationsabhängigen Unsicherheitsgrades besonders berücksichtigt werden.

Die Anpassung der Parametrisierung des Fahrassistenzsystems kann in einer Senkung der Fahrzeuggeschwindigkeit, einer Erhöhung von Sicherheitsabständen, einem früher und somit sanfter ansprechenden Notbremsassistenten, einem langsameren Spurwechsel und dergleichen erfolgen.

Je nach Ausgestaltung kann das Verfahren bei manuell gesteuerten und/oder bei teilautomatisiert gesteuerten und/oder bei automatisiert gesteuerten Fahrzeugen mit Fahrerpräsenz eingesetzt werden.

Dabei kann durch das Verfahren die Unterstützung des Fahrers bei einem ungewohnten Verkehrsumfeld im selben Land geringer oder weniger stark ausgeprägt sein, da der Fahrer die Verkehrsregeln und Verkehrsschilder im Inland bereits kennt. Eine derartige Unterstützung wird durch eine geringere Veränderung der Parameter des Fahrassistenzsystems realisiert. Bei einem Überschreiten von Landesgrenzen kann eine Veränderung der Parameter des Fahrassistenzsystems stärker ausgeprägt sein, um eine intensivere Unterstützung des Fahrers zu ermöglichen.

Je nach Ausgestaltung können unterschiedliche Stufen der Anpassung der Parameter vorgesehen sein, die von unterschiedlichen Stufen oder Wertebereichen des Unsicherheitsgrades abhängen können. Bei einer technisch einfachen Ausgestaltung kann ein erhöhter Unsicherheitsgrad bei einem Überschreiten eines Schwellwerts des Unsicherheitsgrades registriert werden. Anhand der Überschreitung des Schwellwerts können Maßnahmen zur Unterstützung des Fahrers ergriffen werden.

Bei einem Ausführungsbeispiel wird durch die Parametrisierung von mindestens einem Fahrassistenzsystem des Fahrzeugs ein defensiveres Fahrverhalten und/oder eine Reduzierung einer Fahrzeuggeschwindigkeit und/oder eine Vergrößerung von Abständen eingestellt. Über die Höhe des grundsätzlichen Unsicherheitsgrades können durch das Verfahren Fahrassistenzsysteme parametrisiert werden. Dabei können bei einem erhöhten oder hohen Unsicherheitsgrad des Fahrers folgende Systemeinstellungen oder Fahrassistenzsysteme über Parameter bzw. Parametrisierungen angepasst werden:
- Erhöhung eines Abstandes eines Abstandsreglers, wie beispielsweise eines sogenannten Adaptive Cruise Control
- Reduzierung der eingestellten Geschwindigkeit um einige km/h bei einem sogenannten Predictive Adaptive Cruise Control bzw. einem vorausschauenden Abstandsregler
- Defensiveres Verzögerungsverhalten von Fahrassistenzsystemen und Anfahrverhalten an Kreuzungen und Abbiegungen, beispielsweise bei Abstandsreglern oder Notbremsassistenten
- Anpassung des Notbremsassistenten auf ein defensiveres Verhalten

Gemäß einem weiteren Aspekt der Erfindung wird ein Verfahren zum Vorbereiten und/oder Informieren eines Fahrers eines Fahrzeugs bereitgestellt. In einem Schritt wird durch Empfangen und Auswerten von Messdaten von mindestens einem fahrzeugseitigen Sensor ein Befahren eines für den Fahrer ungewohnten Verkehrsumfelds ermittelt. In einem weiteren Schritt wird der Fahrer visuell und/oder akustisch vor dem Befahren des ungewohnten Verkehrsumfelds oder nach dem Befahren des ungewohnten Verkehrsumfelds hinsichtlich Differenzen gegenüber einem gewohnten Verkehrsumfeld des Fahrers informiert. Durch diese Maßnahme kann ein Fahrassistenzsystem realisiert werden, welches vor dem Erreichen eines Szenarios mit einem voraussichtlich steigenden Unsicherheitsgrad des Fahrers den Fahrer aktiv warnen bzw. mit geeigneter Unterstützung darauf vorbereiten kann. Die Unterstützung des Fahrers kann beispielsweise durch visuelle Symbole oder kurze Hinweistexte mit Erklärung der Verkehrsregeln zur vorausliegenden Fahraufgabe, durch Nutzung des HUD zum Visualisieren konkreter Fahranweisungen, durch ein optisches und/oder akustisches "Übersetzen" von Verkehrsschildern in einem Ausland in bekannte Schilder des Herkunftslandes des Fahrers (beispielsweise durch Anzeigen der analogen landeseigenen Schilder) und dergleichen erfolgen.

Weiterhin kann bei einem Befahren eines ungewohnten Verkehrsumfelds diese Fahrt des Fahrers in dem ungewohnten Verkehrsumfeld audio-visuell aufgezeichnet und nach dem Verlassen des ungewohnten Umfelds und/oder bei Fahrt mit einer geringen Fahrzeuggeschwindigkeit und/oder nach einem Abstellen des Fahrzeugs und/oder bei einem Anhalten des Fahrzeugs mit mindestens einer Hilfestellung dem Fahrer bereitgestellt bzw. abgespielt werden. Diese Maßnahme ermöglicht es, dem Fahrer eine Hilfestellung zu geben, ihn jedoch nicht während der Fahraufgabe zusätzlich mental zu belasten.

Nachfolgend werden Ausführungsbeispiele der Erfindung anhand der Zeichnungen näher erläutert. Es zeigen:
- Fig. 1: ein schematisches Ablaufdiagramm zum Veranschaulichen eines erfindungsgemäßen Verfahrens gemäß einer Ausführungsform, und
- Fig. 2: eine Seitenansicht auf ein Fahrzeug gemäß einer Ausführungsform der Erfindung.

In den Figuren weisen dieselben konstruktiven Elemente jeweils dieselben Bezugsziffern auf.

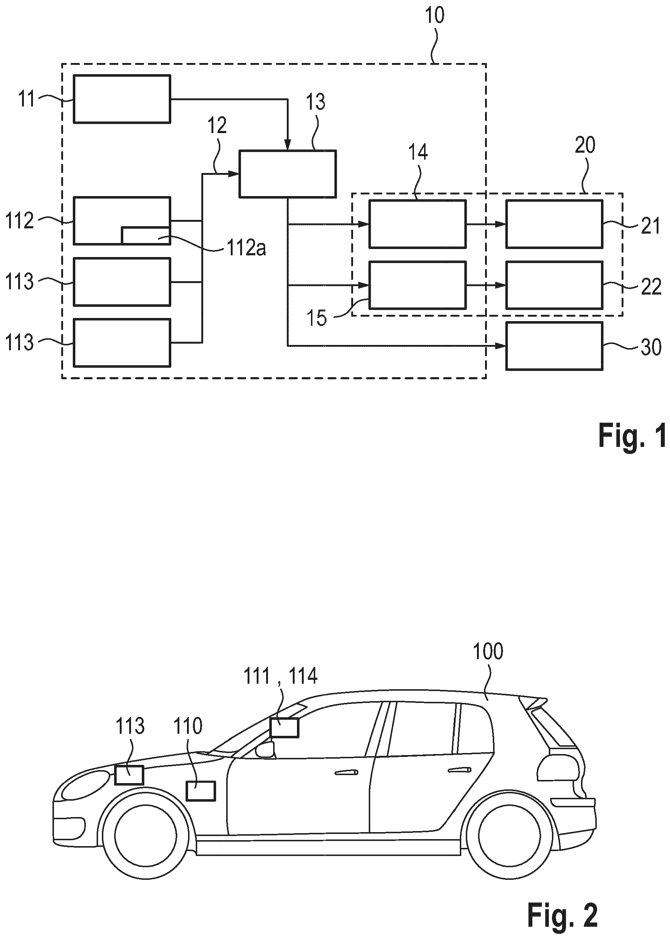

Die Fig. 1 zeigt ein schematisches Ablaufdiagramm zum Veranschaulichen eines erfindungsgemäßen Verfahrens gemäß einer Ausführungsform. Dabei wird zuerst ein Verfahren 10 zum Ermitteln eines Unsicherheitsgrades eines Fahrers eines Fahrzeugs 100 durchgeführt. Auf einem ermittelten Unsicherheitsgrad des Fahrers aufbauend werden anschließend ein Verfahren 20 zum Unterstützen des Fahrers des Fahrzeugs 100 in einem ungewohnten Verkehrsumfeld und ein Verfahren 30 zum Vorbereiten und/oder Informieren des Fahrers des Fahrzeugs 100 beschrieben. Hierbei wird Bezug auf die Fig. 2 genommen, in welcher ein Fahrzeug 100 gemäß einer Ausführungsform der Erfindung in einer Seitenansicht illustriert ist.

In einem Schritt 11 des Verfahrens 10 erfolgt eine Aktivierung. Dabei werden Messdaten von mindestens einem Positionssensor 111 des Fahrzeugs 100 durch eine Steuereinheit 110 empfangen und ausgewertet. Anhand der Messdaten des Positionssensors 111 wird im dargestellten Ausführungsbeispiel ein Verlassen eines Landes bzw. ein Überschreiten einer Landesgrenze durch die Steuereinheit 110 detektiert. Das Überschreiten der Landesgrenze kann beispielsweise als ein Verlassen eines gewohnten Verkehrsumfelds und ein Befahren eines ungewohnten Verkehrsumfelds definiert sein.

In einem weiteren Schritt 12 des Verfahrens 10 werden Messdaten von mindestens einem weiteren Sensor 112, 113, 114 empfangen und ausgewertet. Dabei können in der Vergangenheit ermittelte Messdaten 112a von Sensoren, Messdaten von Umfeldsensoren 113 und Messdaten von Sensoren zur Fahrerbeobachtung 114 durch die Steuereinheit 110 empfangen und ausgewertet werden. Hierzu können die ermittelten und ausgewerteten Messdaten zumindest zeitweise gespeichert und zu Vergleichszwecken eingesetzt werden, um Abweichungen eines Fahrverhaltens des Fahrers in neuen Umgebungen bzw. Verkehrsumfeldern zu registrieren.

Als Umfeldsensoren 113 können beispielsweise Radarsensoren, Kamerasensoren, Ultraschallsensoren, LIDAR-Sensoren und dergleichen verwendet und mit der Steuereinheit 110 gekoppelt werden.

Anhand der in der Vergangenheit ermittelten Messdaten 112a kann eine historische bzw. frühere Fahrerfahrung des Fahrers in einem ungewohnten Verkehrsumfeld, wie beispielsweise einem Ausland, abgerufen und bei der Bestimmung des Unsicherheitsgrades berücksichtigt werden. Die in der Vergangenheit ermittelten Messdaten 112a können beispielsweise in einer externen Speichereinheit, einer Cloud oder in einer internen Speichereinheit der Steuereinheit 110 hinterlegt werden.

Basierend auf den ausgewerteten Messdaten und/oder basierend auf den ausgewerteten Messdaten in Relation zu ausgewerteten Messdaten 112a in der Vergangenheit wird in einem Schritt 13 ein Unsicherheitsgrad des Fahrers ermittelt.

Der ermittelte Unsicherheitsgrad des Fahrers kann dabei als ein genereller Unsicherheitsgrad 14 oder ein situationsabhängiger Unsicherheitsgrad 15 ermittelt oder unterschieden werden.

Basierend auf dem ermittelten Unsicherheitsgrad 14, 15 erfolgt im Rahmen des Verfahrens 20 zum Unterstützen des Fahrers des Fahrzeugs 100 in einem ungewohnten Verkehrsumfeld eine Parametrisierung 21, 22 von mindestens einem Fahrassistenzsystem des Fahrzeugs 100. Dabei erfolgt durch die Parametrisierung 21, 22 eine Anpassung von Einstellungen und/oder Parametern von mindestens einem Fahrassistenzsystem des Fahrzeugs 100. Als ein mögliches Fahrassistenzsystem kann ein Bremsassistent, ein Abstandsregler bzw. ACC, ein Spurhalteassistent, ein Abbiegeassistent, eine automatisierte oder teilautomatisierte Längsführung und/oder Querführung des Fahrzeugs 100 und dergleichen durch das Verfahren 20 angepasst werden.

Die Parametrisierung 21 kann hierbei anhand eines grundsätzlichen Unsicherheitsgrades 14 erfolgen. Alternativ oder zusätzlich kann eine Parametrisierung 22 anhand des situationsabhängigen Unsicherheitsgrades 15 realisiert werden.

Alternativ oder zusätzlich zum beschriebenen Verfahren 20 kann ein Verfahren 30 zum Vorbereiten und/oder Informieren des Fahrers des Fahrzeugs 100 durchgeführt werden. Dabei wird durch Empfangen und Auswerten von Messdaten von mindestens einem fahrzeugseitigen Sensor 114, 113 ein Befahren eines für den Fahrer ungewohnten Verkehrsumfelds ermittelt. In einem weiteren Schritt wird der Fahrer visuell und/oder akustisch vor dem Befahren des ungewohnten Verkehrsumfelds oder nach dem Befahren des ungewohnten Verkehrsumfelds hinsichtlich Differenzen gegenüber einem gewohnten Verkehrsumfeld des Fahrers informiert.

### Bezugszeichenliste

- 100: Fahrzeug
- 110: Steuereinheit
- 111: Positionssensor
- 112: Sensor
- 112a: historische Messdaten
- 113: Umfeldsensoren
- 114: Sensor zur Fahrerbeobachtung

- 10: Verfahren zum Ermitteln eines Unsicherheitsgrades
- 11: Aktivieren des Verfahrens / Befahren eines ungewohnten Verkehrsumfelds
- 12: Ermitteln und Auswerten von Messdaten
- 13: Ermitteln eines Unsicherheitsgrades des Fahrers
- 14: Genereller Unsicherheitsgrad des Fahrers
- 15: Situationsabhängiger Unsicherheitsgrad des Fahrers

- 20: Verfahren zum Unterstützen des Fahrers
- 21: generelle Parametrisierung von mindestens einem Fahrassistenzsystem
- 22: situationsabhängige Parametrisierung von mindestens einem Fahrassistenzsystem

- 30: Verfahren zum Vorbereiten und/oder Informieren des Fahrers

## Patentansprüche

1. Verfahren (10) zum Ermitteln eines Unsicherheitsgrades eines Fahrers eines Fahrzeugs (100), wobei Messdaten von mindestens einem fahrzeugseitigen Sensor (111, 112, 113, 114) empfangen und ausgewertet werden, wobei basierend auf den ausgewerteten Messdaten und/oder basierend auf den ausgewerteten Messdaten in Relation zu ausgewerteten Messdaten (112) in der Vergangenheit ein Unsicherheitsgrad des Fahrers ermittelt wird, **dadurch gekennzeichnet, dass** Messdaten von mindestens einem Positionssensor (111) empfangen und ausgewertet werden, wobei anhand der Messdaten des Positionssensors (111) der Unsicherheitsgrad des Fahrers in einem gewohnten Verkehrsumfeld des Fahrers oder in einem ungewohnten Verkehrsumfeld des Fahrers ermittelt wird, und/oder wobei ein gewohntes Verkehrsumfeld des Fahrers oder ungewohntes Verkehrsumfeld des Fahrers anhand des ermittelten Unsicherheitsgrades des Fahrers bestimmt wird.

2. Verfahren nach Anspruch 1, wobei der Unsicherheitsgrad des Fahrers in einem ungewohnten Verkehrsumfeld bei einem Überschreiten einer Landesgrenze oder in einem Ausland ermittelt wird.

3. Verfahren nach einem der Ansprüche 1 oder 2, wobei der Unsicherheitsgrad in Form eines generellen Unsicherheitsgrades (14) oder in Form eines situationsabhängigen Unsicherheitsgrades (15) ermittelt wird.

4. Verfahren nach einem der Ansprüche 1 bis 3, wobei Messdaten von einem Geschwindigkeitssensor empfangen und ausgewertet werden.

5. Verfahren nach einem der Ansprüche 1 bis 4, wobei Messdaten von mindestens einem Kamerasensor und/oder einem PSD-Sensor empfangen und ausgewertet werden.

6. Verfahren nach einem der Ansprüche 1 bis 5, wobei Messdaten von mindestens einem Radarsensor und/oder LIDAR-Sensor empfangen und ausgewertet werden.

7. Verfahren nach einem der Ansprüche 1 bis 6, wobei Messdaten von mindestens einem Sensor (114) zur Fahrerüberwachung empfangen und ausgewertet werden.

8. Verfahren nach einem der Ansprüche 1 bis 7, wobei der Unsicherheitsgrad des Fahrers kontinuierlich oder in zeitlichen Abständen ermittelt wird, wobei eine zeitliche Veränderung des Unsicherheitsgrades des Fahrers bestimmt wird.

9. Verfahren (20) zum Unterstützen eines Fahrers eines Fahrzeugs (100) in einem ungewohnten Verkehrsumfeld, wobei ein Unsicherheitsgrad des Fahrers durch ein Verfahren (10) gemäß einem der vorhergehenden Ansprüche ermittelt wird, wobei basierend auf dem ermittelten Unsicherheitsgrad eine Parametrisierung (21, 22) von mindestens einem Fahrassistenzsystem des Fahrzeugs (100) angepasst wird.

10. Verfahren nach Anspruch 9, wobei durch die Parametrisierung von mindestens einem Fahrassistenzsystem des Fahrzeugs (100) ein defensiveres Fahrverhalten und/oder eine Reduzierung einer Fahrzeuggeschwindigkeit und/oder eine Vergrößerung von Abständen eingestellt werden.

11. Steuereinheit (110), welche dazu eingerichtet ist, Messdaten von mindestens einem Sensor (111, 112, 113, 114) zu empfangen und zumindest eines der Verfahren (10, 20, 30) gemäß einem der vorhergehenden Ansprüche auszuführen.

12. Fahrzeug (100), aufweisend mindestens einen Sensor (111,112, 113, 114) und mindestens eine Steuereinheit (110) gemäß Anspruch 11.

## Claims

1. Method (10) for determining a degree of uncertainty of a driver of a vehicle (100), wherein measurement data from at least one onboard sensor (111, 112, 113, 114) are received and evaluated, wherein, based on the evaluated measurement data and/or based on the evaluated measurement data in relation to evaluated measurement data (112) from the past, a degree of uncertainty of the driver is determined, **characterized in that** measurement data from at least one position sensor (111) are received and evaluated, wherein the degree of uncertainty of the driver in a traffic environment familiar to the driver or in a traffic environment unfamiliar to the driver is determined based on the measurement data of the position sensor (111), and/or wherein a traffic environment familiar to the driver or a traffic environment unfamiliar to the driver is determined based on the determined degree of uncertainty of the driver.

2. Method according to claim 1, wherein the degree of uncertainty of the driver in an unfamiliar traffic environment is determined when crossing a national border or in a foreign country.

3. Method according to either claim 1 or claim 2, wherein the degree of uncertainty is determined in the form of a general degree of uncertainty (14) or in the form of a situation-dependent degree of uncertainty (15).

4. Method according to any of claims 1 to 3, wherein measurement data from a speed sensor are received and evaluated.

5. Method according to any of claims 1 to 4, wherein measurement data from at least one camera sensor and/or a PSD sensor are received and evaluated.

6. Method according to any of claims 1 to 5, wherein measurement data from at least one radar sensor and/or LIDAR sensor are received and evaluated.

7. Method according to any of claims 1 to 6, wherein measurement data from at least one sensor for driver monitoring (114) are received and evaluated.

8. Method according to any of claims 1 to 7, wherein the degree of uncertainty of the driver is determined continuously or at time intervals, wherein a change in the degree of uncertainty of the driver over time is determined.

9. Method (20) for assisting a driver of a vehicle (100) in an unfamiliar traffic environment, wherein a degree of uncertainty of the driver is determined by a method (10) according to any of the preceding claims, wherein a parameterization (21, 22) of at least one driver assistance system of the vehicle (100) is adjusted based on the determined degree of uncertainty.

10. Method according to claim 9, wherein, by parameterizing at least one driver assistance system of the vehicle (100), a more defensive driving behavior and/or a reduction of vehicle speed and/or an increase in distances is set.

11. Control unit (110) which is designed to receive measurement data from at least one sensor (111, 112, 113, 114) and to carry out at least one of the methods (10, 20, 30) according to any of the preceding claims.

12. Vehicle (100) having at least one sensor (111, 112, 113, 114) and at least one control unit (110) according to claim 11.

## Revendications

1. Procédé (10) permettant de déterminer un degré d'incertitude d'un conducteur d'un véhicule (100), dans lequel des données de mesure d'au moins un capteur (111, 112, 113, 114) côté véhicule sont reçues et évaluées, dans lequel un degré d'incertitude du conducteur est déterminé dans le passé sur la base des données de mesure évaluées et/ou sur la base des données de mesure évaluées en relation avec des données de mesure (112) évaluées,
**caractérisé en ce que** des données de mesure d'au moins un capteur de position (111) sont reçues et évaluées, dans lequel le degré d'incertitude du conducteur est déterminé à l'aide des données de mesure du capteur de position (111) dans un environnement de circulation habituel du conducteur ou dans un environnement de circulation inhabituel du conducteur, et/ou dans lequel un environnement de circulation habituel du conducteur ou un environnement de circulation inhabituel du conducteur est établi à l'aide du degré d'incertitude déterminé du conducteur.

2. Procédé selon la revendication 1, dans lequel le degré d'incertitude du conducteur est déterminé dans un environnement de circulation inhabituel lors du franchissement d'une frontière nationale ou à l'étranger.

3. Procédé selon l'une des revendications 1 ou 2, dans lequel le degré d'incertitude est déterminé sous la forme d'un degré d'incertitude général (14) ou sous la forme d'un degré d'incertitude dépendant de la situation (15).

4. Procédé selon l'une des revendications 1 à 3, dans lequel des données de mesure sont reçues et évaluées par un capteur de vitesse.

5. Procédé selon l'une des revendications 1 à 4, dans lequel des données de mesure sont reçues et évaluées par au moins un capteur de caméra et/ou par un capteur PSD.

6. Procédé selon l'une des revendications 1 à 5, dans lequel des données de mesure sont reçues et évaluées par au moins un capteur radar et/ou par un capteur LIDAR.

7. Procédé selon l'une des revendications 1 à 6, dans lequel des données de mesure sont reçues et évaluées par au moins un capteur (114) pour la surveillance du conducteur.

8. Procédé selon l'une des revendications 1 à 7, dans lequel le degré d'incertitude du conducteur est déterminé en continu ou à des intervalles de temps, dans lequel une variation dans le temps du degré d'incertitude du conducteur est déterminée.

9. Procédé (20) pour l'aide à la conduite d'un conducteur d'un véhicule (100) dans un environnement de circulation inhabituel, dans lequel un degré d'incertitude du conducteur est déterminé par un procédé (10) selon l'une des revendications précédentes, dans lequel un paramétrage (21, 22) d'au moins un système d'aide à la conduite du véhicule (100) est adapté sur la base du degré d'incertitude déterminé.

10. Procédé selon la revendication 9, dans lequel le paramétrage d'au moins un système d'aide à la conduite du véhicule (100) permet de régler un comportement de conduite plus défensif et/ou une réduction d'une vitesse de véhicule et/ou une augmentation des distances.

11. Unité de commande (110) configurée pour recevoir des données de mesure d'au moins un capteur (111, 112, 113, 114) et pour mettre en œuvre au moins l'un des procédés (10, 20, 30) selon l'une des revendications précédentes.

12. Véhicule (100), présentant au moins un capteur (111, 112, 113, 114) et au moins une unité de commande (110) selon la revendication 11.
